Europäisches Patentamt

European Patent Office

Office européen des brevets

(19)

(11) Numéro de publication : **0 074 060**
**B1**

(12) FASCICULE DE BREVET EUROPÉEN

(45) Date de publication du fascicule du brevet :
30.07.86

(21) Numéro de dépôt : 82107993.6

(22) Date de dépôt : 31.08.82

(51) Int. Cl.⁴ : **F 16 L   3/20**, F 16 F 15/06

(54) Dispositif de supportage à ressort pour tuyauteries.

(30) Priorité : 04.09.81 FR 8116839

(43) Date de publication de la demande :
16.03.83 Bulletin 83/11

(45) Mention de la délivrance du brevet :
30.07.86 Bulletin 86/31

(84) Etats contractants désignés :
AT BE CH DE FR GB LI NL SE

(56) Documents cités :
FR-A- 2 034 869
FR-A- 2 267 504
US-A- 2 867 399
US-A- 2 905 415

(73) Titulaire : STEIN INDUSTRIE Société Anonyme dite:
19-21, avenue Morane Saulnier
F-78140 Velizy Villacoublay (FR)

(72) Inventeur : Perrier, Jean
20, rue d'Auvergne
F-78690 Les Essarts-Leroi (FR)

(74) Mandataire : Weinmiller, Jürgen et al
Zeppelinstrasse 63
D-8000 München 80 (DE)

Jouve, 18, rue St-Denis, 75001 Paris, France

**Description**

La présente invention concerne un dispositif de supportage à ressort à déplacement vertical important pour tuyauterie de masse relativement faible par unité de longueur, par exemple dans le cas de tuyauteries exerçant sur leur support une charge de 15 à 50 daN et devant pouvoir subir un déplacement vertical de 200 à 300 mm.

On ne peut supporter des tuyauteries de ce genre par des ressorts à réaction variable de type courant, car la variation de charge entre les états comprimé et étendu du ressort est trop importante.

Des ressorts à réaction constante, tel que celui décrit dans le document FR-A-2 267 504, permettent d'obtenir une charge sensiblement constante quel que soit leur allongement, mais ils sont complexes et coûteux et ne sont pas construits en pratique pour des charges aussi faibles. On utilise donc dans de tels cas des systèmes à contrepoids, avec fléau pivotant autour d'un point fixe, ou à câble et poulie, qui présentent des dangers, du fait de la possibilité de chute d'éléments du contre-poids, et sont encombrants lorsqu'ils comportent un fléau.

Le document US-A-2 867 399 décrit un dispositif de supportage à ressort à déplacement vertical pour tuyauterie, qui comporte un quadrilatère articulé comprenant une première articulation, une deuxième articulation solidaire de la charge, à l'opposé et à la verticale de la première, et deux articulations latérales dans un même plan horizontal, les deux bras du quadrilatère passant par la première articulation étant reliés par des axes de pivotement à des bras auxiliaires s'appuyant sur un plateau sollicitant à la compression deux ressorts disposés de part et d'autre du quadrilatère articulé, la longueur effective des bras auxiliaires étant plus faible que celle des côtés du quadrilatère articulé. Un tel dispositif est cependant relativement complexe et sujet à des grippages du fait des angles aigus formés entre eux par les bras du quadrilatère, et entre les bras passant par la première articulation et les bras auxiliaires.

La présente invention a pour but de procurer un dispositif de supportage à ressort simple et peu coûteux, de fonctionnement fiable, et qui permette d'utiliser des boîtiers de ressort à réaction variable disponibles dans le commerce.

Le dispositif de supportage selon l'invention est caractérisé en ce que le quadrilatère articulé est un parallélogramme articulé dont les bras portant sur le plateau sollicitant le ressort à la compression sont constitués par des prolongements des deux bras du parallélogramme passant par la première articulation, glissant sur la face inférieure du plateau, qui est relié par sa face supérieure à des moyens comprimant le ressort de compression sous l'effet de la charge.

Les articulations latérales du parallélogramme sont de préférence traversées initialement par une tige horizontale provisoire munie de moyens de blocage de ces articulations.

Il est décrit ci-après, à titre d'exemple et en référence aux figures du dessin annexé, un dispositif de supportage de tuyauterie de purge de chaudière de centrale thermique selon l'invention.

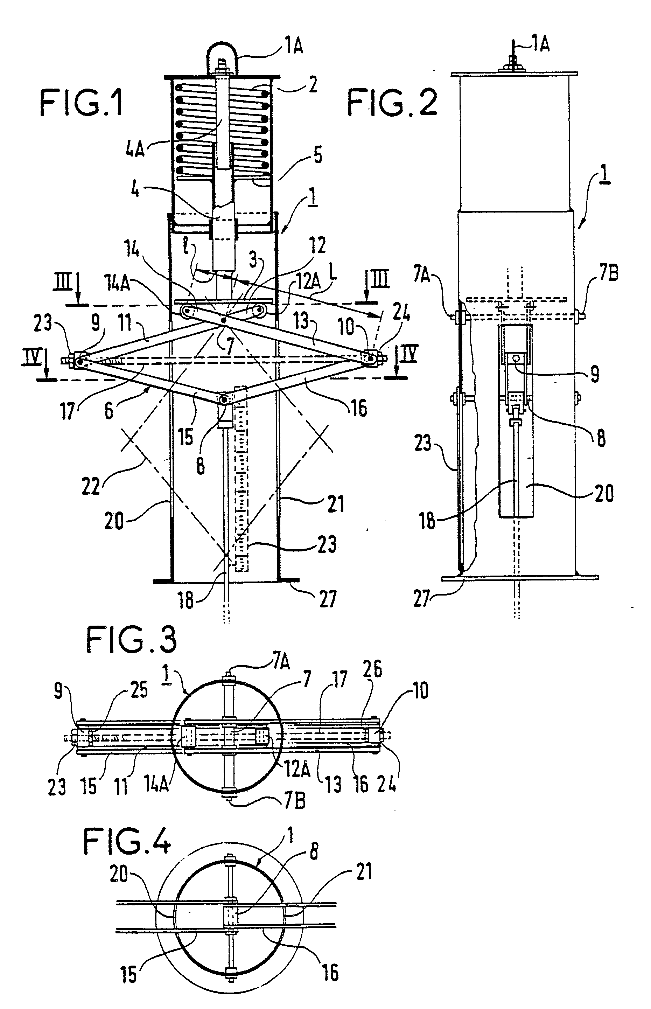

La figure 1    représente le dispositif en coupe axiale.

La figure 2    le représente en élévation du côté d'une fenêtre latérale, avec arrachement partiel.

La figure 3    représente une section droite selon l'axe III-III de la figure 1.

La figure 4    représente une section droite selon l'axe IV-IV de la figure 1.

Le boîtier du dispositif, relié au point fixe 1A, contient un ressort de compression à réaction variable 2, soumis à l'effort exercé par le plateau 3, transmis par la tige mobile 4, coulissant sur la tige fixe 4A, au plateau 5.

Le parallélogramme articulé 6 comprend une articulation supérieure 7 et une articulation inférieure 8, reliée à la charge (non représentée) par une tige verticale 18 d'accrochage de la charge, et deux articulations latérales 9 et 10.

Les bras supérieurs du parallélogramme comprennent respectivement des branches relativement longues 11 et 13, de longueur L, entre les articulations latérales et l'articulation supérieure 7, et des prolongements relativement courts 12 et 14, de longueur l, au-delà de l'articulation supérieure 7, et dont les extrémités supérieures portent, par l'intermédiaire de rouleaux 12A, 14A, contre le plateau 3 commandant la compression du ressort. Les bras inférieurs 15 et 16 sont naturellement de longueur égale à celle des branches 11 et 13. La tige horizontale 17, sur laquelle se déplacent les articulations latérales 9, 10, est enlevée après le montage du dispositif et les épreuves éventuelles. Le rapport L/l des longueurs des branches du parallélogramme à celles de leurs prolongements entraîne que pour un déplacement donné du ressort, on a au niveau de la charge à supporter, solidaire de l'articulation inférieure, un déplacement vertical 2L/l fois plus grand. La charge appliquée au ressort correspond à celle de l'élément de tuyauterie à supporter, multipliée par le rapport L/l.

On peut faire varier le facteur de multiplication du dispositif en remplaçant le parallélogramme articulé par un autre parallélogramme de rapport L/l différent, ou en disposant deux ou plusieurs parallélogrammes en série.

Le boîtier 1 comporte des fenêtres latérales allongées 20, 21 permettant le débattement des bras du parallélogramme. La position du parallélogramme pour le déplacement maximal admissible est représentée en traits tiretés en 22. Une échelle graduée 23 permet de suivre le débattement de l'articulation inférieure.

A titre d'exemple, pour une charge de 50 daN et un déplacement prévu de la charge de 200 mm, on peut employer un boîtier à ressort taré à 150 daN, admettant un déplacement vertical de 33 mm, avec un rapport des longueurs des branches supérieures du parallélogramme à celles de leur prolongements de 3. Avec un ressort de raideur 1,12 daN/mm, la variation de charge au niveau de l'élément de tuyauterie est de 1,12 × (33/3) = 12,5 daN, soit 25 % de cette charge.

On peut verrouiller le dispositif afin de l'isoler pendant le montage ou de permettre de soumettre la tuyauterie à une épreuve hydraulique. A cet effet, les articulations latérales 9, 10 sont munies d'écrous tels que 23, 24, 25, 26 permettant de les bloquer sur la tige 17.

Le dispositif peut être pendu sous une structure par l'intermédiaire de la pièce 1A, ou posé sur une structure par l'intermédiaire du rebord plan 27, mais il ne peut pas se situer sous la charge.

## Revendications

1. Dispositif de supportage à ressort (2) à déplacement vertical important pour tuyauterie de masse relativement faible, comportant un quadrilatère articulé comprenant :

a) une première articulation (7) reliée à un point fixe,

b) une deuxième articulation (8) solidaire de la charge, à l'opposé et à la verticale de la première,

c) deux articulations latérales (9, 10) dans un même plan horizontal, les deux bras (11, 13) du parallélogramme passant par la première articulation portant des bras portant sur un plateau (3) sollicitant le ressort à la compression, et de longueur notablement plus faible que celle des côtés du quadrilatère reliant les articulations entre elles, caractérisé en ce que le quadrilatère articulé est un parallélogramme dont les bras portant sur le plateau sollicitant le ressort à la compression sont constitués par des prolongements (12, 14) des deux bras (11, 13) du parallélogramme passant par la première articulation, glissant sur la face inférieure du plateau (3), qui est relié par sa face supérieure à des moyens (5) comprimant le ressort de compression sous l'effet de la charge.

2. Dispositif selon la revendication 1, caractérisé en ce que les articulations latérales du parallélogramme sont traversées initialement par une tige horizontale (17) munie de moyens de blocage de ces articulations (23, 24, 25, 26), et destiné à être retirée après le montage et des épreuves éventuelles.

## Claims

1. A spring support device (2) of large vertical displacement for a pipework of relatively low mass, comprising a linked quadrangle comprising :

a) a first articulation (7) connected to a stationary point,

b) a second articulation (8) fixed to the load and situated vertically opposite to the first articulation,

c) two lateral articulations (9, 10) in a common horizontal plane, the two arms (11, 13) of the parallelogram passing through the first articulation carrying arms which bear against a plate (3) compressing the spring, and which have a length notably smaller than that of the sides of the quadrangle interconnecting the articulations, characterized in that the articulated quadrangle is a parallelogram the arms which bear against the plate and compress the spring being constituted by extensions (12, 14) of the two arms (11, 13) of the parallelogram passing through the first articulation, and sliding on the lower face of the plate (3), which is connected by its upper face to means (5) compressing the compression spring under the effect of the load.

2. A device according to claim 1, characterized in that the lateral articulations of the parallelogram are initially traversed by a horizontal rod (17) supplied with locking means for these articulations (23, 24, 25, 26) and conceived to be removed after the assembly and possible tests.

## Patentansprüche

1. Gefederte und einen großen senkrechten Verschiebungshub zulassende Haltevorrichtung (2) für eine Rohrleitung relativ geringer Masse, die ein Gelenk-Viereck enthält, das aufweist :

a) ein mit einem festen Punkt verbundenes erstes Gelenk (7),

b) ein fest mit der Last verbundenes zweites Gelenk (8), das entgegengesetzt und senkrecht zum ersten liegt,

c) zwei seitliche Gelenke (9, 10) in einer gemeinsamen waagerechten Ebene, wobei die beiden Arme (11, 13) des Parallelogramms, die durch das erste Gelenk gehen, Arme tragen, die auf eine Platte (3) drücken und die die Feder komprimierer, wobei die Länge dieser letzteren Arme wesentlich kleiner ist als die der die Gelenke miteinander verbindenden Seiten des Vierecks, dadurch gekennzeichnet, daß das Gelenk-Viereck ein Gelenk-Parallelogramm ist, dessen auf die Platte drückenden und die Feder komprimierenden Arme von Verlängerungen (12, 14) der beiden Arme (11, 13) des Parallelogramms gebildet werden, die durch das erste Gelenk gehen, und auf der Unterseite der Platte (3) gleiten, die über ihre Oberseite mit Mitteln (5) verbunden ist, die die Kompressionsfeder unter dem Druck der Last komprimieren.

2. Vorrichtung nach Anspruch 1, dadurch gekennzeichnet, daß die seitlichen Gelenke des Parallelogramms zuerst von einem waagerechten Stab (17) durchquert werden, der mit Blockiermitteln (23, 24, 25, 26) für diese Gelenke versehen ist und nach dem Zusammenbau und nach eventuellen Versuchen entfernt wird.

FIG.1

FIG.2

FIG.3

FIG.4